# EUROPÄISCHE PATENTANMELDUNG

(11) **EP 1 016 483 A2**
(43) Veröffentlichungstag der Anmeldung: **05.07.2000**
(21) Anmeldenummer: 99124606.7
(22) Anmeldetag: 10.12.1999
(51) Int. Cl.: B23F 23/12

(54) **Anordnung aus Wälzfräser und Aufnahmedorn**

(30) Priorität: 28.12.1998 DE 19860403
(71) Anmelder: Wilhelm Fette GmbH, 21493 Schwarzenbek (DE)
(72) Erfinder: Carmincke, Wolfgang, 21379 Scharnebeck (DE); Davids, Christian, 21514 Büchen (DE); Ebert, Andreas, 23896 Nusse (DE); Hinzpeter, Jürgen, 21493 Schwarzenbeck (DE); Kölker, Werner, Dr., 23909 Ratzeburg (DE); Lämmerhirt, Wolfram, 21493 Schwarzenbeck (DE); Pleus, Ansgar, 21493 Schwarzenbeck (DE); Schadowski, Meinhard, 21493 Schwarzenbeck (DE); Soltau, Wolfgang, 19490 Neu Darchau (DE); Steffen, Gerhard, 23879 Mölln (DE)
(74) Vertreter: Patentanwälte Hauck, Graalfs, Wehnert, Döring, Siemons

(57) **Zusammenfassung**

Anordnung aus Wälzfräser in Bohrungsausführung und Aufnahmedorn, bei der die Bohrung des Wälzfräsers an den Enden geschliffene zylindrische Zentrierflächen und der Dorn komplementäre Sitzflächen aufweist und bei der mit Hilfe axialer Spannmittel der Wälzfräser auf dem Aufnahmedorn axial aufgespannt ist, dadurch gekennzeichnet, daß ein vorzugsweise hülsenförmiger Käfig (36,56,56a,58) zwischen Zentrierflächen (32,34,32a,34a) angeordnet ist, der eine Dicke aufweist, die geringer ist als der radiale Abstand zwischen Zentrier- und Sitzflächen und einen Außendurchmesser, der geringer ist als der Innendurchmesser der Zentrierflächen (32,34,32a,34a), der Käfig (36,56,56a,58) in Umfangsrichtung mindestens eine Reihe von vorzugsweise metallischen Vorspannelementen (38) lagert, die mit der zugeordneten Zentrierfläche und der Sitzfläche in Kontakt sind und der Durchmesser bzw. der Abstand der Anlagepunkte oder Anlagelinien der Vorspannelemente (38) geringfügig größer ist als der radiale Abstand zwischen Zentrier- und Sitzflächen.

## Beschreibung

Die Erfindung bezieht sich auf eine Anordnung aus Wälzfräser in Bohrungsausführung und Aufnahmedorn nach dem Oberbegriff des Patentanspruchs 1.

Im Hinblick auf die Aufnahme in der Wälzfräsmaschine wird bei Wälzfräsern zwischen einer Bohrungsausführung und einer Schaftausführung unterschieden. Bei der Bohrungsausführung weist der Wälzfräskörper eine zentrische Bohrung auf mit einer Längsnut zur formschlüssigen Drehmomentübertragung. In diesem Fall ist in einer Nut des Aufnahmedorns ein Keil angeordnet, der mit der Längsnut der Fräserbohrung zusammenwirkt. Es ist jedoch auch bekannt, die Fräserbohrung stirnseitig mit einer Quernut kreuzen zu lassen, um eine formschlüssige Drehmomentübertragung zu erhalten. Schließlich ist auch bekannt, eine kraftschlüssige Drehmomentübertragung über die Stirnseite zu erhalten.

Bei der Schaftausführung sind Fräserkörper und kegelige oder zylindrische Schäfte an den Enden des Fräserkörpers einteilig geformt. Ein derartiges massiv ausgeführtes Werkzeug zeichnet sich in der Regel durch eine sehr hohe Rundlaufgenauigkeit aus. Ein Vorausrichten auf dem Fräsdorn ist nicht erforderlich. Nachteilig ist jedoch der hohe Aufwand, insbesondere wenn der Fräser komplett aus Hartmetall gefertigt wird. Aus hartem Werkstoff gefertigte Fräser sind äußerst empfindlich gegen Stoß und Schlag. Wird der Fräser beschädigt, muß er häufig ausgetauscht werden.

Die am weitesten verbreitete Art von Wälzfräsern ist in Bohrungsausführung mit Längsnut hergestellt. Sie werden von einem standardisierten Aufnahmedorn aufgenommen. Die Bohrung weist in beiden Endbereichen geschliffene, z. B. zylindrische Zentrierflächen auf, die sich jeweils über annähernd ein Drittel der Länge des Fräserkörpers erstrecken. (Das präzise Schleifen über die gesamte Bohrungswandung ist auch bekannt, erfordert jedoch einen höheren Fertigungsaufwand.) Der Aufnahmedorn hat entsprechende zylindrische geschliffene Sitzflächen. Da der Fräserkörper auf den Aufnahmedorn aufgeschoben wird, ist eine minimale Lose zwischen den Teilen erforderlich. Diese beeinträchtigt naturgemäß die Rundlaufgenauigkeit. Nach der Montage ist die Rundlaufgenauigkeit an dafür vorgesehenen Prüfbunden des Fräskörpers zu prüfen. Ist diese unterhalb der vorgeschriebenen Toleranz nicht vorhanden, ist es üblich, daß eine Bedienungsperson das Werkzeug ausrichtet und so lange eine radiale Relativverschiebung zwischen Fräskörper und Aufnahmedorn bewerkstelligt, bis die gewünschte Rundlaufgenauigkeit erreicht ist. In jedem Fall ist jedoch die Rundlaufgenauigkeit herkömmlicher Wälzfräser in Bohrungsausführung signifikant geringer als die in Schaftausführung.

Der Erfindung liegt die Aufgabe zugrunde, eine Anordnung aus Wälzfräser und Aufnahmedorn zu schaffen, die eine gleich hohe Rundlaufgenauigkeit ermöglicht wie Wälzfräser in Schaftausführung, die jedoch die Nachteile dieser Ausführung vermeidet.

Diese Aufgabe wird durch die Merkmale des Patentanspruchs 1 gelöst.

Bei der erfindungsgemäßen Anordnung ist eine Hülse oder ein Käfig vorgesehen, der zwischen der Zentrierfläche des Wälzfräsers und der Sitzfläche des Aufnahmedorns angeordnet ist. Nach einer Ausgestaltung der Erfindung können zwei getrennte Käfige vorgesehen werden, die jeweils im Bereich der Zentrierflächen angeordnet werden, oder ein durchgehender hülsenförmiger Käfig, der sich über die gesamte Bohrung des Wälzfräsers erstreckt. Die Dicke des Käfigs ist kleiner als der radiale Abstand zwischen Zentrierfläche und Sitzfläche. Der Käfig nimmt in Umfangsrichtung mindestens eine Reihe von vorzugsweise metallischen Vorspannelementen auf, die mit der zugeordneten Zentrierfläche und Sitzfläche in Kontakt sind. Dieser kann punkt- oder linienförmig, aber auch kreis- oder ellipsenförmig sein. Dabei ist der Durchmesser bzw. der Abstand der Anlagepunkte oder Anlagelinien der Vorspannelemente geringfügig größer als der radiale Abstand zwischen Zentrier- und Sitzfläche.

Der Käfig muß konstruktiv so ausgeführt sein, daß er die beschriebenen Anforderungen erfüllt, nämlich die Aufnahme der Vorspannelemente zu gewährleisten. Besonders vorteilhaft ist die Verwendung einer Hülse, vorzugsweise aus Metall.

Beim Einbringen des hülsenförmigen Käfigs zwischen Aufnahmedorn und Wälzfräser findet eine relativ geringfügige elastische Verformung der Vorspannelemente statt. Da eine Reihe von Vorspannelementen über den Umfang des Käfigs verteilt angeordnet ist, vorzugsweise in gleichen Umfangsabständen, wird der Wälzfräser auf dem Aufnahmedorn automatisch zentriert. Eine Rundlaufprüfung und ggf. nachträgliche radiale Ausrichtung des Wälzkörpers entfällt. Die erfindungsgemäße Anordnung ermöglicht mithin einen Wälzfräser von gleich guten Rundlaufeigenschaften wie Wälzfräser in Schaftausführung, vermeidet indessen deren Nachteile. So ist der Wälzfräser der erfindungsgemäßen Anordnung von deutlich geringerem Gewicht als ein Wälzfräser in Schaftausführung. Der Wälzfräser nach der Erfindung ist daher leichter handhabbar. Ferner ist er im Hinblick auf den Materialeinsatz deutlich weniger aufwendig als Wälzfräser in Schaftausführung.

Die Vorspannelemente werden vorzugsweise von Kugeln oder Rollen gebildet. Bei der Verwendung von Rollen findet z. B. ein linienförmiger Kontakt zwischen den zylindrischen Flächen von Wälzfräser und Aufnahmedorn statt.

Die erfindungsgemäße Anordnung hat ferner den Vorteil, daß die geschliffenen Zentrierflächen an den Enden der Bohrung eine relativ geringe axiale Ausdehnung benötigen, die deutlich geringer ist als ein Drittel der Wälzfräserlänge, wie dies bei herkömmlichen Wälzfräsern in Bohrungsausführung bekannt ist. Der Freistich, der sich vorzugsweise an die geschliffene Zentrierfläche nach innen anschließt, kann bei der erfindungsgemäßen Anordnung deutlich länger gehalten werden als dies bei der bekannten Ausführung der Fall ist. Mithin ist die Fertigung des erfindungsgemäßen Wälzfräsers auch einfacher und weniger aufwendig als herkömmliche Wälzfräser in Bohrungsausführung.

Alternativ kann statt eines Vorspannelemente aufweisenden hülsenförmigen Käfigs auch eine hydraulisch radial ausdehnbare Spannhülse vorgesehen werden, welche im entspannten Zustand eine Dicke aufweist, die kleiner ist als der radiale Abstand zwischen Zentrier- und Sitzflächen. Die Spannhülse kann eine umlaufende Ringkammer oder auch eine Mehrzahl von im Umfangsabstand angeordnete Kammern aufweisen, in die ein hydraulisches Medium unter Druck einbringbar ist, wodurch sich die Hülse radial innen und außen aufweitet. Sie hat den gleichen Zentriereffekt zur Folge wie der beschriebene hülsenförmige Käfig mit Vorspannelementen.

Besonders vorteilhaft bei der erfindungsgemäßen Anordnung ist, wenn der Wälzfräser auf einem systemgleichen Dorn gefertigt wird. Nach dem Formen der Bohrung und den erwähnten zylindrischen Zentrierflächen an den Enden der Bohrung wird für die weitere Fertigung der Wälzfräser auf einen Fertigungsdorn aufgespannt, der seinerseits zylindrische Sitzflächen aufweist. Mit Hilfe des schon beschriebenen hülsenförmigen Käfigs wird dann der Wälzfräser auf dem Fertigungsdorn zentriert. Alle weiteren Fertigungsschritte bis zur endgültigen Herstellung des Wälzfräsers können dann auf diesem Dorn vorgenommen werden. Die Aufspannung des Wälzfräsers auf dem Fertigungsdorn kann in ähnlicher Weise erfolgen wie bei dem Aufnahmedorn in der Fräsmaschine, und zwar z.B. mit Hilfe einer hydraulischen Spannmutter, die auf den Dorn aufgeschraubt wird. Durch Aufbringen eines hydraulischen Drucks auf ein hydraulisches Medium wird ein Abschnitt der Mutter gegen die zugekehrte Stirnseite des Wälzfräsers angepreßt, vorzugsweise über einen Zwischenring, um den Wälzfräser gegen eine Widerlagerfläche am Dorn axial festzulegen. Wie schon erwähnt, eine Rundlaufprüfung ist nicht erforderlich.

Die Fertigung des Wälzfräsers auf dem beschriebenen Fertigungsdorn trägt ebenfalls entscheidend zur Verbesserung des Fräsergebnisses bei. Die Austauschbarkeit zwischen verschiedenen Wälzfräsern und Dornen ist bei bleibender Rundlaufgenauigkeit gewährleistet.

Die erfindungsgemäße Anordnung erlaubt eine Innenkühlung bzw. Vorwärmung des Wälzfräsers zur Kompensation von Spannungen und maßlichen Veränderungen als Folge von Wärmeentwicklungen im Fräsprozeß.

Nach einer Ausgestaltung der Erfindung werden die Sitzflächen des Fertigungs- bzw. Aufnahmedorns von Buchsen gebildet, die auf den Dorn aufgeschrumpft oder - geklebt sind. Diese Ausgestaltung hat den Vorteil, daß der Dorn nicht als Ganzes fortgeworfen werden muß, wenn die Sitzfläche beschädigt ist. Vielmehr können die Buchsen entfernt und durch andere ersetzt werden.

Anhand von in Zeichnungen dargestellten Ausführungsbeispielen wird die Erfindung nachstehend näher erläutert.
- Fig. 1: zeigt im Schnitt eine erste Ausführungsform einer Anordnung nach der Erfindung.
- Fig. 2: zeigt im Schnitt eine zweite Ausführungsform einer Anordnung nach der Erfindung.
- Fig. 3: zeigt im Schnitt eine dritte Ausführungsform einer Anordnung nach der Erfindung.

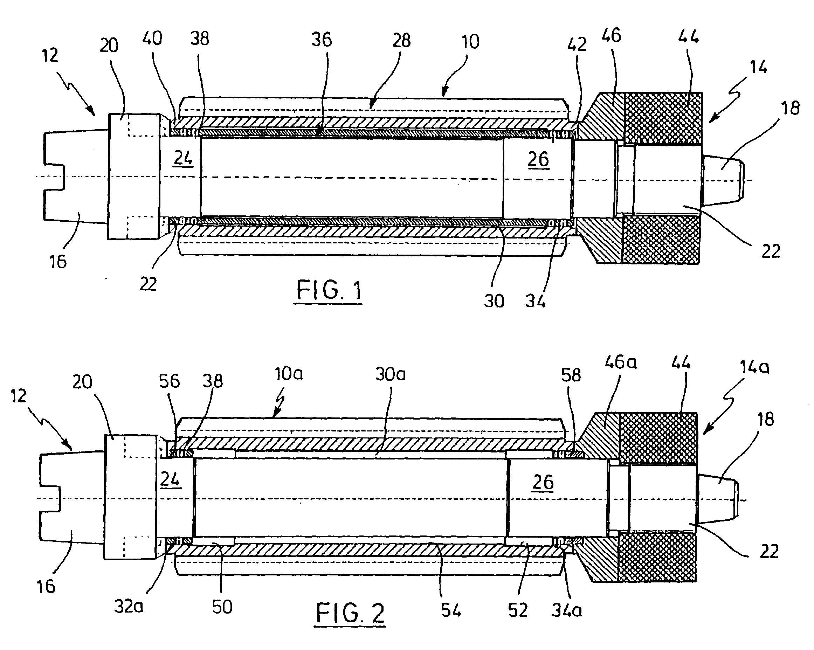

Die in Fig. 1 dargestellte Anordnung weist einen Wälzfräser 10, einen Aufnahmedorn 12 für eine Fräsmaschine und eine Spannvorrichtung 14 auf Der Aufnahmedorn 12 ist von herkömmlicher Konfiguration und weist an den Enden Spannkegel 16, 18 auf, einen Anschlagbund 20 an einem Ende angrenzend an den Kegel 16 sowie einen Gewindeabschnitt 22 angrenzend an den Kegel 18. Außerdem weist der zwischen den Kegeln 16, 18 liegende Schaftabschnitt zwei zylindrische Sitzflächen 24, 26 auf, die präzise geschliffen sind.

Der Wälzfräser 10, dessen Werkzeugabschnitt 28 herkömmlich ist, weist eine mittige Durchbohrung 30 auf, die an den Enden mit zylindrischen Zentrierflächen 32 bzw. 34 versehen ist. Der Durchmesser der Zentrierflächen 32, 34 ist etwas geringer als der der übrigen Bohrung 30, so daß die übrige Bohrung auch als Freistich betrachtet werden kann.

Wie in Fig. 1 ferner zu erkennen, ist in die Bohrung 30 ein hülsenförmiger Käfig 36 angeordnet. Er hat eine über seine Länge gleichmäßige Dicke, die geringer ist als der radiale Abstand zwischen den Sitzflächen 24, 26 und den Zentrierflächen 32, 34. Außerdem weist er einen Außendurchmesser auf, der geringfügig kleiner ist als der Innendurchmesser der Zentrierflächen 32, 34 und einen Innendurchmesser, der geringfügig größer als der Außendurchmesser der Sitzflächen 24, 26 ist. An den Enden weist der Käfig 36 jeweils zwei Reihen von Kugeln 38 auf, die in gleichmäßigem Umfangsabstand in entsprechenden radialen Bohrungen des hülsenförmigen Käfigs 36 aufgenommen sind. Der Durchmesser der Kugeln 38 ist größer als die Dicke des Käfigs 36 und geringfügig größer als der radiale Abstand zwischen den Sitzflächen 24, 26 und den Zentrierflächen 32, 34. Auf diese Weise werden die Kugeln zwischen den Flächen elastisch verformt und zentrieren den Fräser 10 präzise im Hinblick auf den Aufnahmedorn 12. Dadurch wird eine hohe Rundlaufgenauigkeit erhalten. Die Prüfung der Rundlaufgenauigkeit erfolgt bekannterweise an der Umfangsfläche von Prüfbunden 40, 42.

Die Vorspannvorrichtung 14 weist eine hydraulisch spannbare Mutter 44 auf, die auf den Gewindeabschnitt 22 aufgeschraubt wird. Ein nicht gezeigter Abschnitt der Mutter 44 läßt sich axial in Richtung Wälzfräser 10 verstellen, indem über einen nicht gezeigten Anschluß hydraulisches Medium unter Druck eingebracht wird. Über einen Zwischenring 46 wird mithin der Wälzfräser 10 mit mehr oder weniger hoher Preßkraft gegen den Widerlagerbund 20 angepreßt. Auf diese Weise wird nicht nur die axiale Lage des Fräsers 10 festgelegt, sondern auch die Drehmomentübertragung durch Kraftschluß hergestellt.

Soweit bei der Ausführungsform nach Fig. 2 Teile gezeigt sind, die mit denen nach Fig. 1 übereinstimmen, sind gleiche Bezugszeichen verwendet.

Die durchgehende Bohrung 30a des Wälzfräsers 10a ist an den Enden wiederum mit zylindrischen Zentrierflächen 32a, 34a versehen, an denen sich nach innen Einstiche 50, 52 anschließen sowie ein mittlerer Bohrungsabschnitt 54. Bei dieser Ausführungsform sind zwei relativ kurze hülsenförmige Käfige 56, 58 vorgesehen, deren Länge nur geringfügig größer ist als die axiale Ausdehnung der Zentrierflächen 32a, 34a. Dabei ist die Hülse 58 länger als die Hülse 56. Sie steht über das zugeordnete Ende des Wälzfräsers 10a hinaus in eine Ausnehmung des Zwischenrings 46a hinein, der wie der Ring 46 von der hydraulischen Mutter 44 gegen die zugeordnete Stirnseite des Fräsers 10a angepreßt wird. Jeder hülsenförmige Käfig 56, 58 weist eine Reihe von Kugeln 38 auf, die in gleichmäßigem Umfangsabstand in radialen Bohrungen des Käfigs angeordnet sind. Die Wirkungsweise der Käfige 56, 58 und auch die geometrischen Beziehungen bezogen auf Zentrier- und Sitzfläche sind völlig gleich denen des hülsenförmigen Käfigs 36 nach Fig. 1.

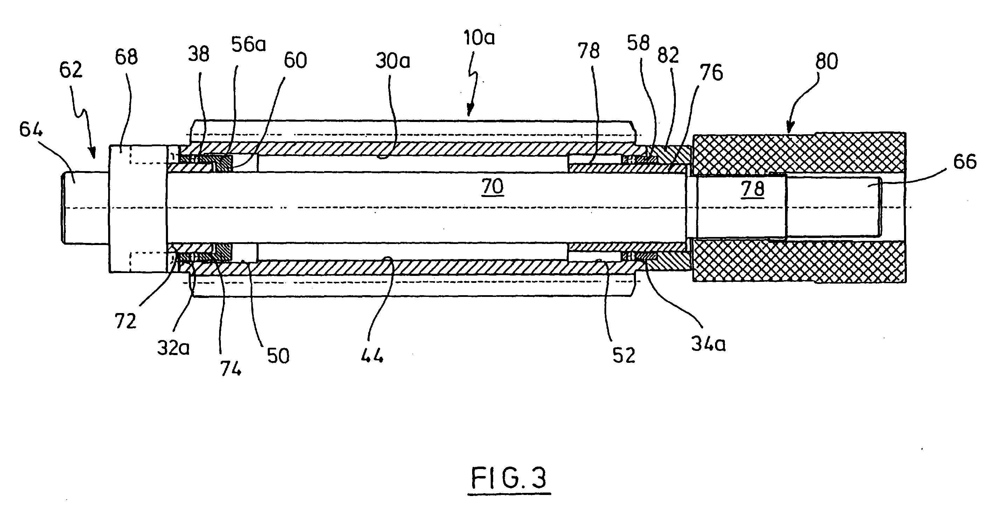

Bei der Anordnung nach Fig, 3 ist ein Wälzfräser 10a verwendet, der dem nach Fig. 2 gleicht. Es werden daher gleiche Bezugszeichen wie in Fig. 2 insoweit verwendet. Auch der hülsenförmige Käfig 58 am rechten Ende entspricht dem nach Fig. 2. Der linke hülsenförmige Käfig 56a weist einen radial nach innen weisenden Bund 60 auf In Fig. 3 ist ein Aufnahmedorn 62 dargestellt, der sich von dem Aufnahmedorn 12 nach Fig. 1 und 2 unterscheidet. Es handelt sich hier um einen Fertigungsdorn für die Fertigung des Wälzfräsers 10a. Der Dorn 62 weist an den Enden zylindrische Zapfen 64, 66 auf, die zur Aufnahme an Spitzen in den einzelnen Fertigungsstationen geeignet sind. Anschließend an den zylindrischen Zapfen 64 ist ein radialer Bund 68 geformt als Widerlager für den Wälzfräser 10a. Auf dem relativ schlanken Schaft 70 zwischen den Zapfen 64, 66 ist angrenzend an den Widerlagerbund 68 eine Buchse 72 aufgebracht, beispielsweise durch Schrumpfung oder Klebung, deren Umfangsfläche 74 eine Sitzfläche bildet entsprechend der Sitzfläche 24 der Ausführungsform nach den Figuren 1 und 2. Angrenzend an den Zapfen 66 ist eine weitere Buchse 76 durch Aufschrumpfung oder Klebung auf dem Schaft 70 angebracht. Die Buchse 76 bildet eine zylindrische Sitzfläche 78. Die Buchsen 72, 76 können ersetzt werden, wenn die zugehörigen Sitzflächen beschädigt und für die Fertigung nicht mehr geeignet sind. In ihrer Funktion gleichen sie den Sitzflächen des Aufnahmedorns nach den Figuren 1 und 2. Daher ist eine nähere Beschreibung der Anordnung des Wälzfräsers 10a auf dem Fertigungsdorn 62 nicht erforderlich.

Auf einem Gewindeabschnitt 78 des Schaftes 70 sitzt eine hydraulische Mutter 80, welche in axialer Richtung eine Spannung erzeugen kann, wie dies in Verbindung mit der Mutter 44 schon beschrieben wurde. Sie erzeugt mithin eine axiale Preßkraft auf den Fräser 10a über einen Zwischenring 82. Der Zwischenring nimmt in einer Ausnehmung den Käfig 58 auf Die Buchse 72 sitzt in einer ringförmigen Ausnehmung des Widerlagerbundes 68. Der radiale Bund 60 des Käfigs 56a verhindert eine unerwünschte Bewegung des Käfigs 56a.

Nach Herstellung der Bohrung 30a und den zugeordneten Sitzflächen 32a, 34a wird der vorgefertigte Wälzfräser 10a bzw. der Vorformling auf dem Fertigungsdorn 62 in der beschriebenen Art und Weise aufgespannt und kann dann alle übrigen Fertigungsstationen durchlaufen. Dies sichert dem Wälzfräser 10a eine hohe Präzision, und seine Rundlaufgenauigkeit wird bei der Anordnung auf einem Dorn 12, wie er in den Figuren 1 und 2 gezeigt ist, beibehalten.

## Patentansprüche

1. Anordnung aus Wälzfräser in Bohrungsausführung und Aufnahmedorn, bei der die Bohrung des Wälzfräsers an den Enden geschliffene zylindrische Zentrierflächen und der Dorn komplementäre Sitzflächen aufweist und bei der mit Hilfe axialer Spannmittel der Wälzfräser auf dem Aufnahmedorn axial aufgespannt ist, dadurch gekennzeichnet, daß ein vorzugsweise hülsenförmiger Käfig (36, 56, 56a, 58) zwischen Zentrierflächen (32, 34, 32a, 34a) angeordnet ist, der eine Dicke aufweist, die geringer ist als der radiale Abstand zwischen Zentrier- und Sitzflächen und einen Außendurchmesser, der geringer ist als der Innendurchmes-. ser der Zentrierflächen (32, 34, 32a, 34a), der Käfig (36, 56, 56a, 58) in Umfangsrichtung mindestens eine Reihe von vorzugsweise metallischen Vorspannelementen (38) lagert, die mit der zugeordneten Zentrierfläche und der Sitzfläche in Kontakt sind und der Durchmesser bzw. der Abstand der Anlagepunkte oder Anlagelinien der Vorspannelemente (38) geringfügig größer ist als der radiale Abstand zwischen Zentrier- und Sitzflächen.

2. Anordnung nach Anspruch 1, dadurch gekennzeichnet, daß die Vorspannelemente (38) Kugeln oder zylindrische, kegelige oder tonnenförmige Rollen sind.

3. Anordnung aus Wälzfräser in Bohrungsausführung und Aufnahmedorn, bei der die Bohrung des Wälzfräsers an den Enden geschliffene zylindrische Zentrierflächen und der Dorn komplementäre geschliffene zylindrische Sitzflächen aufweist und bei der mit Hilfe axialer Spannmittel der Wälzfräser auf dem Aufnahmedorn axial aufgespannt ist, dadurch gekennzeichnet, daß eine hydraulisch radial ausdehnbare Spannhülse zwischen Zentrierfläche und Sitzfläche angeordnet ist, die im entspannten Zustand eine Dicke aufweist, die geringer ist als der radiale Abstand zwischen Zentrier- und Sitzfläche und der Außendurchmesser der Spannhülse geringer ist als der Innendurchmesser der Zentrierflächen.

4. Anordnung nach einem der Ansprüche 1 bis 3, dadurch gekennzeichnet, daß der Käfig (36) oder die Spannhülse sich annähernd über die Länge der Bohrung (30) des Wälzfräsers (10) erstreckt.

5. Anordnung nach einem der Ansprüche 1 bis 3, dadurch gekennzeichnet, daß die Länge eines Käfigs (56, 58, 56a) oder Spannhülse gleich oder etwas größer ist als die der Zentrierflächen (32a, 34a).

6. Anordnung nach einem der Ansprüche 1 bis 5, dadurch gekennzeichnet, daß die Bohrung (30a) des Wälzfräsers (10a) an der Innenseite der Zentrierflächen (32a, 34a) einen Freistich (50, 52) aufweist.

7. Anordnung nach einem der Ansprüche 1 bis 6, dadurch gekennzeichnet, daß die Sitzflächen von Buchsen (72, 74) gebildet sind, die auf dem Dorn (62)fixiert, vorzugsweise aufgeschrumpft oder geklebt sind.
